Europäisches Patentamt

European Patent Office

Office européen des brevets

(11) Veröffentlichungsnummer: **0 256 342 B1**

(12) **EUROPÄISCHE PATENTSCHRIFT**

(45) Veröffentlichungstag der Patentschrift: **11.03.92**

(21) Anmeldenummer: **87110659.7**

(22) Anmeldetag: **23.07.87**

(51) Int. Cl.⁵: **G01S 7/02**, G01S 13/10

(54) **Radargerät.**

(30) Priorität: **08.08.86 CH 3186/86**

(43) Veröffentlichungstag der Anmeldung:
**24.02.88 Patentblatt 88/08**

(45) Bekanntmachung des Hinweises auf die
Patenterteilung:
**11.03.92 Patentblatt 92/11**

(84) Benannte Vertragsstaaten:
**CH DE FR GB IT LI NL SE**

(56) Entgegenhaltungen:
**EP-A- 0 049 087**
**DE-A- 3 414 159**
**US-A- 3 755 814**
**US-A- 4 430 655**

**WESCON CONFERENCE RECORD, 18.-20. September 1979, Seiten 1-6, Nr. 20/5, San Francisco, US; F.J. BERNUES et al.: "Millemeter-wave solid state radar front-ends"**

(73) Patentinhaber: **SIEMENS-ALBIS AKTIENGE-SELLSCHAFT**
**PV/Patente und Verträge Postfach**
**CH-8047 Zürich(CH)**

(72) Erfinder: **Loder, Max**
**Bruggenmattweg 12**
**CH-8906 Bonstetten(CH)**

**Beschreibung**

Die vorliegende Erfindung betrifft ein Radargerät gemäss dem Oberbegriff des Patentanspruchs 1.

In Radargeräten werden vielfach sogenannte TR- oder Sende/Empfangs-Umschalter eingesetzt, mit deren Hilfe die Antenne entweder an den Sender oder an den Empfänger angeschlossen wird, um wiederholt kurze, jedoch sehr starke Impulssignale zu senden und dann die schwachen Echosignale zu empfangen. Solche TR-Umschalter bewirken jedoch, dass das Radargerät eine relativ grosse Minimal-Reichweite aufweist, da in den TR-Umschaltern gasgefüllte Röhren vorhanden sind, die bis zur Entionisierung eine relativ lange Zeit von ca. 500 ns bis 2µs brauchen. Zudem wird bei jedem Sendepuls ein den TR-Zellen nachgeschalteter ZF-Verstärker übersteuert, der eine weitere Zeitspanne braucht, um sich davon zu erholen. Bei solchen Radargeräten stellt sich somit das Problem, geeignete Massnahmen zu treffen, um das Ziel bis in den Nahbereich verfolgen zu können. Hierzu kann beispielsweise nebst dem Hochleistungssender ein zusätzlicher Sender für die im Nahbereich benötigte kleine Leistung eingesetzt werden. Zu diesem Zweck wäre eine zweite Antenne oder ein Mikrowellen-Umschalter vorzusehen, der das zusätzliche Sendesignal in den Sendepfad einkoppelt. Derartige Lösungen sind indessen relativ aufwendig; der Mikrowellen-Umschalter müsste insbesondere sehr leistungsfähig sein.

Aus der EP 0 049 087 ist ferner ein Radargerät bekannt, das zwischen Echosignalen unterscheidet, die von einem weit entfernten oder einem nahen Zielobjekt reflektiert werden. Zu diesem Zweck werden durch die Sendeeinrichtung Pulssequenzen ausgesendet, die aus Pulspaaren mit je einem kurzen und einem längeren Puls bestehen. In der Empfangseinrichtung werden die Echosignale mit kleiner Pulsbreite zur Vermessung von Zielobjekten im Nahbereich und die Echosignale mit grosser Pulsbreite zur Vermessung von weiter entfernten Zielobjekten verwendet. Durch die Aussendung von Pulspaaren zur Vermessung nur eines Zielobjektes erhöht sich jedoch die Zeitdauer bis die gasgefüllten Röhren entionisiert sind und der TR-Umschalter auf Empfang umschaltet. Die Zielobjekte können daher nicht in einem kleinen Nahbereichsradius vermessen werden, wie dies durch die vorliegende Erfindung angestrebt wird.

Der Erfindung liegt daher die Aufgabe zugrunde, ein Radargerät mit einem kleinen Nahbereichsradius zu schaffen, das wenig aufwendig ist. Diese Aufgabe wird durch die im kennzeichnenden Teil des Anspruchs 1 dargelegten Massnahmen gelöst.

Vorteilhafte Ausgestaltungen der Erfindung sind in weiteren Ansprüchen angegeben.

Die Erfindung wird nachfolgend anhand einer Zeichnung beispielsweise näher erläutert. Die Figur zeigt das Blockschaltbild eines Radargerätes nach der Erfindung.

Das Radargerät weist einen TR-Umschalter TR auf, mit dessen Hilfe die Antenne A entweder an einen Sender SEND oder über einen Begrenzer LM an den ersten Anschluss eines Zirkulators Z angeschlossen werden kann, dessen zweiter Anschluss über einen Verstärker V mit dem ersten Eingang eines Mischers EM verbunden ist. Zwischen Sender SEND und TR-Umschalte ist ein Koppler KL eingefügt, der einen Bruchteil des Sendesignals auskoppelt, der in einem Sendemischer SM mit dem Ausgangssignal eines Oszillators STALO gemischt wird. Das Ausgangssignal des Mischers SM wird dem Eingang eines Kohärenzoszillators COHO zugeführt, dessen Ausgang über einen Phasenmodulator PM mit dem Eingang eines 90°-Phasenschiebers PS verbunden ist, dessen Inphasen- und Quadratur-Ausgangssignal je einem Eingang eines Einseitenbandmodulators SSB zugeführt wird. Zwischen dem Ausgang des Oszillators STALO und dem entsprechenden Eingang des Mischers SM ist ein weiterer Koppler KP eingefügt, dessen ausgekoppeltes Signal über die Reihenschaltung des Einseitenbandmodulators SSB und eines Verstärkers VZ dem dritten Anschluss des Zirkulators Z zugeführt wird. Ein weiteres vom Oszillator STALO abgezweigtes Signal wird im Mischer EM mit dem Ausgangssignal des Verstärkers V gemischt und über einen Zwischenfrequenzverstärker-Demodulator ZFV dem Eingang einer Auswerteschaltung AS zugeführt. Der Demodulator ZFV kann zweckmässigerweise von einem weiteren Ausgangssignal des Kohärenzoszillators COHO gesteuert werden. Die Auswerteschaltung liefert ein Triggersignal g für den Sender, den Phasenmodulator PM und den Begrenzer LM sowie ein Steuersignal s für den Sender und den Verstärker VZ.

Das erfindungsgemässe Radargerät funktioniert folgendermassen:
Ein Radargerät ohne die Elemente PM,PS,SSB, VZ and Z ist an sich bekannt*, so dass nur die Arbeitsweise dieser Elemente beschrieben wird. Vom freischwingenden Kohärenzoszillator COHO wird ein sogenannter Burst von beispielsweise 100 ns Länge mit einer Frequenz von z.B. 60 MHZ abgeleitet und dem Modulator SSB zugeführt. Dort wird das vom Prüfausgang des Oszillators STALO stammende Signal auf Sendefrequenz umgesetzt. Diese Frequenz muss nicht notwendigerweise identisch mit derjenigen des Senders SEND sein. Der Verstärker VZ, beispielsweise ein GASFET-Verstärker,

---

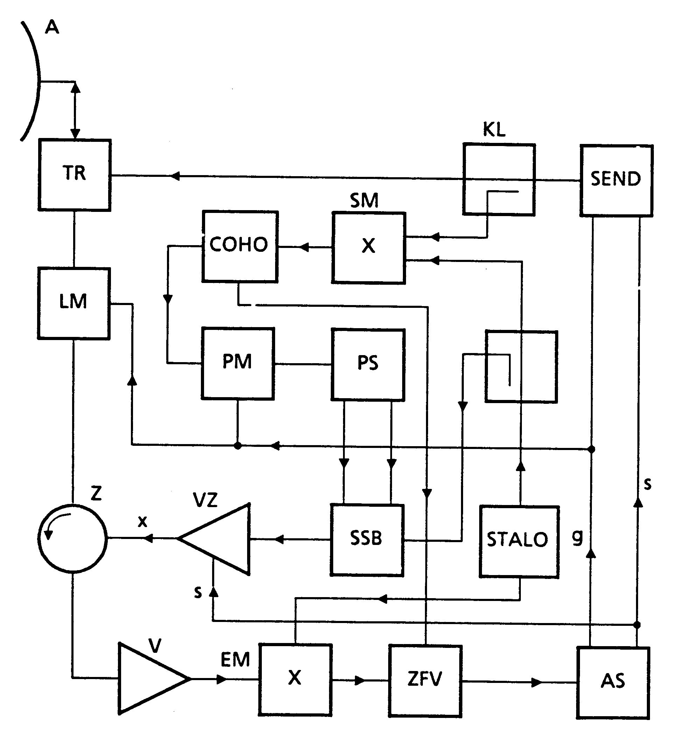

* (z.B. Skolnik, Radar Handbook, New York 1970; Seite 17-5, Fig. 4 und Seite 21-7, Fig. 8)

liefert die notwendige Sendeleistung. Ist diese klein genug, so kann die Einkopplung in den Sendepfad auf der Empfängerseite des TR-Umschalters erfolgen. Wenn die Sendeleistung derart gering ist, dass die TR-Röhre nicht zündet, kann die Energie zur Antenne fliessen. Damit entfällt jegliche Umschaltung im Mikrowell-Pfad, um vom Normalbetrieb beispielsweise mit einem Magnetronsender zum Nahbereichsbetrieb umzuschalten. Für den Nahbereich kann die Sendeleistung ca. 2 ms betragen, wobei dann die Steuerung des Begrenzers LM, sofern vorhanden, entfällt.

Durch den Einsatz einer speziellen TR-Röhre und/oder des gesteuerten Begrenzers LM kann die Sendeleistung im Nahbetrieb erhöht werden.

In der Auswerteschaltung AS ist ein Distanzdiskriminator vorhanden, der beispielsweise ein Signal s = 1 erzeugt, wenn die Zielentfernung kleiner als der Nahbereichsradius ist. Durch das Signal s = 1 wird der Sender SEND gesperrt und der Verstärker VZ eingeschaltet. Für viele Anwendungen kann jedoch der Verstärker VZ ständig eingeschaltet bleiben, da bei der Ausstrahlung der Hochleistungsimpulse das Vorhandensein des Signals x ohne Bedeutung ist. Das Sendesignal x für den Betrieb im Nahbereich kann auch mit anderen Mitteln erzeugt werden, sofern die Einkopplung über den dritten Anschluss des Zirkulators Z erfolgt.

## Patentansprüche

1. Radargerät mit einem Radarempfänger und einem Radarsender, die über einen Sende- / Empfangs-bzw. TR-Umschalter mit einer Antenne verbunden sind, **dadurch gekennzeichnet,** dass zwischen den Empfängeranschluss des TR-Umschalters (TR) und den Eingang des Radarempfängers ein Zirkulator (Z) eingefügt ist, dessen dritter Anschluss mit einer weiteren Sendevorrichtung verbunden ist, die zur Verfolgung von Zielen bis in den Nahbereich ein zusätzliches Nahbereichssignal (x) abgibt, dessen Leistung kleiner als die Zündleistung der TR-Röhre ist.

2. Radargerät nach Anspruch 1, **dadurch gekennzeichnet,** dass das zusätzliche Nahbereichssendesignal (x) vom Ausgangssignal des stabilen Oszillators (STALO) des Radargerätes abgeleitet wird.

3. Radargerät nach Anspruch 2, **dadurch gekennzeichnet,** dass ein Phasenschieber (PS) vorgesehen ist, der ein Inphasen- und ein Quadratursignal abgibt, die je einem Eingang eines Einseitenbandmodulators (SSB) zugeführt werden, der eingangsseitig mit einem Ausgangssignal des stabilen Oszillators (STALO) beaufschlagt ist und ausgangsseitig das Nahbereichssendesignal (x) liefert.

4. Radargerät nach Anspruch 3, **dadurch gekennzeichnet,** dass zwischen den Ausgang des Modulators (SSB) und den dritten Anschluss des Zirkulators (Z) ein Verstärker (VZ) eingefügt ist.

5. Radargerät nach einem der Ansprüche 1 bis 4, **dadurch gekennzeichnet,** dass zwischen den Empfängeranschluss des TR-Umschalters (TR) und den ihm zugeordneten Anschluss des Zirkulators (Z) ein vom Sendetriggersignal (g) gesteuerter Begrenzer (LM) eingefügt ist.

## Claims

1. Radar apparatus having a radar receiver and a radar transmitter which are connected by way of a transmitting/receiving or TR change-over switch with an antenna, characterised in that a circulator (Z) is inserted between the receiver connection of the TR change-over switch (TR) and the input of the radar receiver, the third connection of which circulator is connected to a further transmitting arrangement which for the purpose of tracking targets into the very short range emits an additional very short range signal (x), the power of which is less than the triggering power of the TR tube.

2. Radar apparatus according to claim 1, characterised in that the additional very short range transmitting signal (x) is derived from the output signal of the stable oscillator (STALO) of the radar apparatus.

3. Radar apparatus according to claim 2, characterised in that a phase shifter (PS) is provided, which shifter emits an in-phase signal and a quadrature signal which are supplied, in each case, to an input of a single sideband modulator (SSB) upon which modulator, on the input side, an output signal of the stable oscillator (STALO) acts and which modulator, on the output side, supplies the very short range transmitting signal (x).

4. Radar apparatus according to claim 3, characterised in that an amplifier (VS) is inserted between the output of the modulator (SSB) and the third connection of the circulator (Z).

5. Radar apparatus according to one of the claims 1 to 4, characterised in that a limiter (LM) controlled by the transmitting trigger signal (g) is inserted between the receiver connection of the TR change-over switch (TR) and the connection of the circulator (Z) associated therewith.

**Revendications**

1. Radar comportant un récepteur radar et un émetteur radar, qui sont raccordés à une antenne par l'intermédiaire d'un commutateur d'émission/réception ou commutateur TR, caractérisé par le fait qu'entre la borne de réception du commutateur TR (TR) et l'entrée du récepteur radar est inséré un circulateur (Z), dont la troisième borne est raccordée à un autre dispositif d'émission, qui, pour la poursuite de cibles jusque dans la zone de proximité, délivre un signal de zone de proximité (x), dont la puissance est inférieure à la puissance d'amorçage du tube TR.

2. Radar suivant la revendication 1, caractérisé par le fait que le signal supplémentaire d'émission de zone de proximité (x) est tiré du signal de sortie de l'oscillateur stable (STALO) du radar.

3. Radar suivant la revendication 2, caractérisé par le fait qu'il est prévu un déphaseur (PS), qui délivre un signal en phase et un signal en quadrature, qui sont envoyés aux entrées respectives d'un modulateur à bande latérale unique (SSB), dont le côté entrée est chargé par un signal de sortie de l'oscillateur stable (STALO) et dont le côté sortie délivre le signal d'émission de zone de proximité (x).

4. Radar suivant la revendication 3, caractérisé par le fait qu'un amplificateur (VZ) est inséré entre la sortie du modulateur (SSB) et la troisième borne du circulateur (Z).

5. Radar suivant les revendications 1 à 4, caractérisé par le fait qu'un limiteur (LM) commandé par le signal de déclenchement de l'émission (g) est inséré entre la borne de réception du commutateur TR (TR) et la borne, qui lui est associée, du circulateur (Z).